# EUROPÄISCHE PATENTSCHRIFT

(11) **EP 1 000 257 B1**
(45) Veröffentlichungstag und Bekanntmachung des Hinweises auf die Patenterteilung: **15.11.2006**
(21) Anmeldenummer: 98940243.3
(22) Anmeldetag: 20.07.1998
(51) Int. Cl.: F16C 7/02, F16C 33/14, C23C 4/00

(54) **PLEUEL MIT EINEM LAGERMETALL**
CONNECTING ROD WITH A BEARING METAL
BIELLE MUNIE DE METAL ANTIFRICTION

(30) Priorität: 28.07.1997 DE 19732401; 01.08.1997 DE 19733197
(43) Veröffentlichungstag der Anmeldung: 17.05.2000
(73) Patentinhaber: Volkswagen Aktiengesellschaft, 38436 Wolfsburg (DE)
(72) Erfinder: SCHLEGEL, Udo, D-38159 Vechelde (DE); VOGELSANG, Reinhard, 38226 Salzgitter (DE)
(74) Vertreter: Pohlmann, Bernd Michael
(86) Internationale Anmeldenummer: PCT/EP1998/004499
(87) Internationale Veröffentlichungsnummer: WO 1999/005423

(56) Entgegenhaltungen:
- DE-A- 3 621 184
- DE-A- 4 303 592
- US-A- 3 573 962

## Beschreibung

Die Erfindung betrifft ein Verfahren zum Herstellen eines Pleuels gemäß dem Oberbegriff des Anspruchs 1 sowie ein Pleuel gemäß dem Oberbegriff des Anspruchs 17.

Die heute zum Einsatz kommenden Pleuel, insbesondere für Brennkraftmaschinen, werden als sogenannte geschnittene Pleuel oder als Crackpleuel ausgeführt. Geschnitten oder gecrackt wird hierbei das große Pleuelauge, das die Kurbelwelle umgreift. Das kleine Pleuelauge braucht in der Regel nicht geöffnet zu werden, da es über einen geraden Bolzen mit dem Kolben verbunden wird.

Je nach Lagerbelastung, werden die Pleuelaugen mit unterschiedlichen Lagerschalen (Gleitlager) ausgestattet. Als Lagerschalen kommen insbesondere Stützschalenwerkstoffe zum Einsatz, die in der Regel aus Stahl C 10 nach DIN 17210 bzw. SAE 1010 gebildet sind. Die Lagerschalen können je nach Bauform und Verwendung kalt verfestigt sein. Auf diesen Stützschalenwerkstoff kann die eigentliche Gleitlagerlaufschicht, beispielsweise Weißmetall, Bleibronze, Leichtmetall, Spatterschichten o. ä., in Abhängigkeit der zu erwartenden Lagerbelastung aufgebracht werden. Die Ausführung der Lagerschalen kann als Dreistoff-, Zweistoff- oder Massivlagerschale oder anderes erfolgen. Damit die Lagerschalen nach der Montage einen einwandfreien Festsitz erreichen, werden die Lagerschalen mit einer Vorspannung montiert.

Die Lagerschalen stellen nicht nur einen materiellen Kostenfaktor dar, sie beinhalten auch einen Produktionsaufwand und stellen eine Fehlerquelle dar. So kann beispielsweise bei der Montage der Einsatz einer Lagerschale oder Lagerschalenhälfte vergessen werden, wodurch es zu erheblichen Motorschäden kommt.

Aus der DE 4303592 A ist bereits ein Verfahren zum Herstellen eines Pleuels mit einem Pleuelauge, in dem eine Lagerschicht angeordnet ist, durch thermisches Spritzen eines Lagerwerkstoffes bekannt. Ferner ist aus der WO 97/16578 ein Verfahren zur Herstellung einer Gleitfläche auf ein Zylinder kurbelgehäuse durch thermisches Spritzen einer Beschichtung aus Stahl und Molybdän bekannt, bei dem zur Vorbehandlung einer zu beschichtenden Substratoberfläche des Kurbelgehäuses diese nicht durch Schleifen aufgerauht wird, sondern durch einen Partikel- oder Fluidstrom. Das Kurbelgehäuse wird aus einem Aluminiumwerkstoff im Druckgußverfahren hergestellt. Ferner ist aus der US 5458984 A bekannt, vor dem Deponieren einer Schicht auf einer inneren Zylinderoberfläche eines Körpers, die Oberfläche zunächst zu glätten und dann mit Stahlschrot zu beschießen, um eine gewünschte Oberflächenrauhigkit zu erreichen.

Aufgabe der vorliegenden Erfindung ist es, ein Pleuellager mit hoher Festigkeit einer Gleitschicht zu fertigen.

Diese Aufgabe wird hinsichtlich des Verfahrens gelöst mit den Maßnahmen des Anspruchs 1.

Hinsichtlich eines Pleuels wird die Aufgabe gelöst mit den Merkmalen des Anspruchs 17.

Die Unteransprüche zeigen bevorzugte Ausführungsformen.

Erfindungsgemäß wird in ein Pleuelauge, hierbei handelt es sich insbesondere um das große Pleuelauge, ggf. auch beide Pleuelaugen, nicht mehr eine Lagerschale eingesetzt, sondern die Lagerschicht wird direkt durch thermisches Spritzen auf dem Pleuelauge aufgebracht. Als thermisches Spritzen kommt insbesondere Plasmaspritzen zum Einsatz. Die Pleuel sind insbesondere Teile einer Verbrennungskraftmaschine. Zur Steigerung der Haftzugfestigkeit der Lagerschicht wird das zu beschichtende Material des Pleuelauges aufgerauht, wobei mit mindestens drei unterschiedlichen Sieblinien gestrahlt wird. Zur Erhöhung der Restölmenge auf der Lagerschicht kann diese eine Nut aufweisen und/oder ist microporös.

Die erfindungsgemäß zum Einsatz kommenden unterschiedlichen Sieblinien werden auch als mesh-Klassen bezeichnet, wobei erfindungsgemäß insbesondere die Klassen von 16 mesh bis 230 mesh (16, 18, 20, 25, 30, 35, 40, 45, 50, 60, 70, 80, 100, 120, 140, 170, 200 und 230) zum Einsatz kommen. Die mesh-Zahl gibt die Zahl der Löcher pro Quadratinch (pro 6,45 cm²) in dem verwendeten Sieb an. Die einzelnen Sieblinien, inklusive Toleranzen und Siebdrahtstärken können beispielsweise dem Handbook of Chemistry and Physics, 64th edition, 1983/84, CRC Press Inc. Florida, S.F-114, entnommen werden.

Bei der thermischen Beschichtung eines Pleuelauges wurde festgestellt, daß die verwendbaren Lagerschichten, beispielsweise aus Aluminiumbronze, eine hohe Schichteigenspannung haben, die insbesondere dadurch erhöht ist, daß das Material mit einer nur niedrigen Porosität aufgebracht wird. Hierbei zeigt es sich, daß Maßnahmen zur Erhöhung der Haftfestigkeit der Lagerschicht notwendig sind. Dies wird erfindungsgemäß dadurch erreicht, daß mit mindestens drei Sieblinien sandgestrahlt (partikelgestrahlt) wird.

Die betriebssichere Gestaltung von Pleuellagern verlangt eine verschleißsichere Auslegung und Konstruktion der Lager, um die Lagerkräfte sicher und bei noch zulässigen Temperaturen zu übertragen. Verschleißsicherheit ist immer dann gegeben, wenn die Gleitflächen durch einen tragfähigen Schmierfilm (Ölfilm) voneinander getrennt sind. Ein solcher Schmierfilm ergibt sich bei Gleitlagern durch eine schwach-exzentrische Wellenlagerung. Die rotierende Welle hat hierdurch eine Pumpwirkung, die den Schmierstoff (Motoröl) in den (exzentrischen) Lagerspalt fördert, wobei an den konvergenten Lagerspalten der Öldruck aufgebaut wird. Das heißt, das Schmiermittel wird in den engsten Querschnitt gepreßt. Hierbei entsteht ein Zustand der "Grenzschmierung" (Grenzflächenreibung - Lagermaterial auf Wellenzapfen), wenn die Drehbewegung der Welle beginnt bzw. sehr langsam ist. Eine Zunahme der Drehbewegung bewirkt, daß sich der Ölfilm am Tragen des Wellenzapfens beteiligt, obwohl noch kein zusammenhängender Ölfilm aufgebaut ist. Dies ist ein Zustand der "Mischreibung", d.h. gleichzeitige Grenzflächen- und Schwimmreibung. Dieser Zustand liegt überwiegend beim Anlassen und Abstellen eines Motors vor. Eine weitere Zunahme der Rotationsgeschwindigkeit bewirkt dann die Ausbildung der hydrodynamisch tragenden Schmierfilmschicht mit der Dicke eines halben Lagerspiels. Dieser Zustand ist die "Schwimmreibung". Das Lagerspiel beträgt hierbei üblicherweise 15 bis 60 µm.

Durch die erfindungsgemäße Plasmabeschichtung des (großen) Pleuelauges mit einem entsprechenden Lagermaterial, insbesondere in Verbindung mit Mikroporen und/oder einer Nut innerhalb der Gleitlagerschicht, wird ein hohes Ölrückhaltevolumen innerhalb des Pleuellagers erreicht, wodurch die Reibung und damit der Verschleiß der gegeneinander bewegten Teile, insbesondere bei der Grenzschmierung und der Mischreibung, vermindert sind. Deutlich verbessert wird das Ölrückhaltevolumen durch das Einbringen mindestens einer Nut in das Pleuellager, wobei diese Nut (bzw. Nuten) besonders vorteilhaft als Radialnuten ausgebildet sind. Zur weiteren Erhöhung des Ölrückhaltevermögens beläßt man diese Nuten (zumindest weitgehend) unbearbeitet, d.h. mit der herstellungsbedingten rauhen Oberflächenstruktur.

Die poröse, aber druckstabile Oberflächenstruktur der Gleitlagerfläche, die vorteilhaft spanabhebend bearbeitet ist, und die unbearbeitete Nut mit sehr rauher Oberflächenstruktur bewirken in jedem Lagerzustand, unabhängig von Drehbewegung und Öldruck, daß ein gewisser Ölanteil im Lager gespeichert ist. Hierdurch wird es ermöglicht, den Zustand der Grenzflächen- und Mischreibung schon bei einer geringen Kurbelwellendrehzahl zu durchfahren und damit schneller den Zustand der (nahezu) verschleißfreien hydrodynamischen Schmierung zu erreichen. Das heißt, die Notlaufeigenschaften beim Motoranfahr- und -auslaufzustand werden wesentlich verbessert, wodurch höhere Lagerbelastungen bei gleichen Lagerdimensionen möglich sind.

Die Erfindung hat folgende Vorteile: Es können die sonst bei Pleueln üblichen Lagerschalen, die die Gleitlagerfläche bilden, entfallen, da erfindungsgemäß die Lagerbeschichtung auf den Pleuelwerkstoff (und nicht auf ein extra einzusetzendes Element) aufgebracht werden kann. Hierdurch entfällt auch gleichzeitig die Montage der Lagerschalen. Durch den Wegfall der Lagerschalen und/oder durch eine spanabhebende Nachbearbeitung der erfindungsgemäßen Gleitlagerschicht erreicht man eine Reduzierung der Toleranzen. Bei den üblichen Pleuellagern hat man drei Toleranzen, die erste Toleranz ist die der Kurbelwelle, die zweite Toleranz wird von der Gleitschicht (der Lagerschalen) im Pleuel und die dritte Toleranz vom Pleuelauge, in das die Lagerschale eingesetzt wird, bestimmt. Durch die erfindungsgemäße Beschichtung und Nachbearbeitung der Lagerschicht entfällt die dritte Toleranz. Weiterhin hat man erfindungsgemäß eine größere Materialstärke im Schraubenbereich, da die erfindungsgemäß aufgetragene Lagerschicht eine geringere Stärke hat als eine Lagerschale; hierdurch werden auch höhere Belastungen bei gleichen äußeren Pleuelabmessungen möglich. Die dritte Toleranz (die Toleranz des Pleuelauges) kann bei der vorliegenden Erfindung sehr grob bemessen werden, da sie durch die nachfolgende Beschichtung, die auf das zweite Toleranzmaß, beispielsweise durch Feinspindeln, abgetragen wird, ausgeglichen wird.

Erfindungsgemäß wird die Lagerschicht vorteilhaft derart aufgespritzt, daß sie zumindest in der Oberfläche eine gewisse Porosität hat. Diese Porosität wird dadurch erreicht, daß die Lagerschicht mit Mikroporen hergestellt wird, die auch durch Oxideinschlüsse gebildet werden, die bei der Nachbearbeitung der Schichtoberfläche unter Bildung freier Mikroporen ausgeräumt werden. Der Porositätsanteil liegt im Laufflächenbereich vorteilhaft bei 0,2 bis 6 % und insbesondere beträgt er 0,5 bis 4 %. Vorteilhaft sind die Mikroporen außerdem nicht miteinander verbunden, so daß das Porenvolumen der Mikroporen überwiegend von geschlossenen Poren gebildet ist. Diese Mikroporen bilden ein hydrodynamischen Mikrodruckkammer-Schmiersystem, wobei die Mikroporen beispielsweise durch den spanabhebenden Vorgang der Oberflächenbearbeitung (beispielsweise Feinspindeln) offengelegt werden. Die Poren innerhalb der Gleitlagerfläche dienen hierbei als Ölrückhaltekammern, so daß im Moment des Motorstartes bzw. Motorauslaufes und der beginnenden bzw. nachlassenden Rotation der Kurbelwelle, vermutlich durch Adhäsion des Motorenöles aus den Mikroporen mit der Kurbelwelle, noch ein ausreichendes Ölvolumen zur Gleitfilmbildung (Schwimmreibung) zur Verfügung steht, obwohl der Öldruck im Gleitlager bereits abgefallen ist bzw. erst aufgebaut werden muß. Durch das erfindungsgemäß vorhandene Mikrodruckkammersystem kann der Bereich der Mischreibung wesentlich verkürzt werden. Hierdurch werden auch die Notlaufeigenschaften des Lagers, ohne Einbringung von zusätzlichen Gleitlagerstoffen wie Blei-, Zinn- oder Nickellegierungen o.ä. wesentlich erhöht. Vorteilhaft wird die Größe der Poren und das Porenvolumen je nach Lagerbelastung der Gleitoberfläche beim thermischen Spritzen eingestellt. Üblicherweise befindet sich der überwiegende Teil des Porenvolumens in Poren der Größe 0,2 bis 250 µm, insbesondere 1 bis 50 µm.

Der übliche Ablauf bei der Herstellung der erfindungsgemäßen Lagerschicht ist wie folgt: Zuerst wird die zu beschichtende Substratoberfläche (beispielsweise das große Pleuelauge) gereinigt, insbesondere von Fett befreit. Dies erfolgt beispielsweise mittels Heißdampf. Anschließend wird die Substratoberfläche sandgestrahlt, beispielsweise mit Al₂O₃, auch SiO₂ bzw. SiC sind einsetzbar. Der Strahldruck liegt vorteilhaft bei 3 bis 8 bar und insbesondere bei 4 bis 6 bar, wobei mit unterschiedlichen Körnungen gearbeitet wird. Vorteilhaft wird hierbei eine ansteigende Körnung (gröber werdende Sieblinien) eingesetzt, d.h. zunächst wird mit einem feinere Korn und dann mit einem gröberen Korn sandgestrahlt. Erfindungsgemäß werden mindestens drei unterschiedliche Körnungen (gröber werdende Sieblinien) eingesetzt. Die Körnungen liegen hierbei im üblichen mesh-Bereich, wobei für die feine Körnung vorteilhaft mesh 80 und kleiner, insbesondere mesh 100 bis mesh 230 eingesetzt wird. Für die mittlere Körnung wird vorteilhaft eine Korngröße mit mesh 100 oder größer, insbesondere bis mesh 40 und besonders vorteilhaft mesh 80 bis mesh 45 eingesetzt. Für die grobe Körnung kommt vorteilhaft ein Korn mit mesh 45 oder größer und insbesondere mesh 30 oder größer zum Einsatz, vorteilhaft bis mesh 16 (600 µm bis 1,18 mm Standardsiebgröße).

Mit den unterschiedlichen Körnungen beim Sandstrahlen erreicht man auch im Bereich einer Kerbe, beispielsweise einer Bruchkerbe oder einer Nut, eine gute Oberflächenrauhigkeit, wobei im glatten Bereich eine Oberflächenstruktur mit einer Mittenrauhtiefe RA von ca. 5 bis 10 µm und insbesondere 6,5 bis 8 µm erzielt wird, bei RZ ca. 35 bis 60 µm und insbesondere 42 bis 54 µm. Mit solchen Sandstrahlrauhigkeiten wird eine besonders gute Haftzugfestigkeit der thermisch gespritzten Schicht auf dem Pleuel erreicht.

Anschließend erfolgt eine Plasmabeschichtung, beispielsweise mit einer AlCuFe-Legierung (Aluminiumbronze). Vorzugsweise wird die thermisch gespritzte Lagerschicht mit einer steigenden Porosität hergestellt, wobei als erstes eine Schicht mit einer geringen Porosität (≤ 2 %, insbesondere ≤ 1 %) hergestellt wird. Hierfür eignet sich beispielsweise eine Pulverkorngröße um 38 µm (400 mesh). Diese untere Beschichtung wird in einer Schichtdicke von ca. 100 bis 300 µm, insbesondere 200 bis 250 µm, hergestellt. Hierauf wird dann eine Schicht mit einer Porosität von ca. 2 bis 6 %, insbesondere 2,5 bis 4 % erzeugt, wobei beispielsweise ein Pulverkorn der Größe um ca. 63 µm (mesh 230) eingesetzt wird. Die Pulverkorngröße ist hierbei so gewählt, daß mindestens 40 Gew.%, insbesondere mindestens 50 Gew.-% des Pulvers kleiner oder gleich der Standardsiebgröße ist, vorteilhaft liegen mindestens 70 Gew.-% und insbesondere mindestens 80 Gew.-% innerhalb der nächsten Klasse und weiterhin liegen vorzugsweise mindestens 90 Gew.-% innerhalb des doppelten Durchmessers (halbe mesh-Größe).

Die Schichtdicke wird hierbei ebenfalls in dem für die untere Beschichtung angegebenen Bereich gewählt. Wenn nur eine Schicht gebildet wird, ist diese vorteilhaft 100 bis 600 µm, insbesondere 200 bis 400 µm dick.

Erfindungsgemäß hat es sich gezeigt, daß mit abnehmender Porosität die Schichteigenspannung steigt, wodurch die Gefahr des Ablösens der Schicht vom Pleuelauge besteht. Dem begegnet die vorliegende Erfindung mit den speziellen Sandstrahlschritten, mit denen eine besonders hohe Haftfestigkeit der Schicht auf dem Pleuelauge erreicht wird. Zum anderen wird erfindungsgemäß ein Ablösen der Schicht durch zu hohe Schichteigenspannung dadurch verhindert, daß die Aufbringtemperatur der Schicht erhöht wird. Dies geschieht beispielsweise durch Erhöhung der Spannung bzw. des Stroms an einem Plasmabrenner. Hierdurch wird die Schicht besser auf dem Substrat (Pleuelauge) verteilt und eine bessere Haftung erreicht. Dies geschieht vorteilhaft nur in dem Maße, daß die aufgebrachte Schicht noch eine gewisse geringe Porosität hat, wie sie oben beschrieben ist. Andererseits bringt die Erhöhung der Aufbringtemperatur auch die Gefahr des Ausglühens des Substrats mit sich, das heißt das Substrat kann überhitzt werden. Dies ist insbesondere bei Eisenwerkstoffen problematisch. Dem wird erfindungsgemäß wiederum dadurch begegnet, daß nur eine untere Schicht mit der hohen Aufbringtemperatur abgeschieden wird. Der weitere Schichtaufbau erfolgt dann kälter und insbesondere mit einer höheren Porosität. Wenn diese höhere Porosität für das gewünschte Gleitlager ungeeignet ist, ist dies erfindungsgemäß unproblematisch, wenn diese höher poröse Schicht bei der anschließenden Bearbeitung abgetragen wird. In diesem Fall dient die höher poröse Schicht bzw. die kälter aufgetragene Schicht nur der Substratgewinnung für eine mechanische Nachbearbeitung.

Der Auftrag der Lagerschichten erfolgt vorzugsweise in einem Arbeitsgang, d.h. der Beschichtungsablauf wird nicht unterbrochen. Hierzu erfolgt vorteilhaft eine automatische Pulver- und/oder Parameteranpassung, um die unterschiedlichen Porositäten zu erreichen.

Die untere Lagerschicht deckt vorteilhaft die Unrundheit, die beispielsweise durch das Cracken des Pleuels beim Aufbrechen der Lagerschale entsteht (typische Unrundheit 30 bis 150 µm) ab, und kann zur Erreichung einer für eine spätere Nachbearbeitung genügenden Dicke mit weiteren, insbesondere poröseren Schichten, die verfahrenstechnisch einfacher auf das Lagermaterial des Pleuels aufgebracht werden können, abgedeckt werden. Diese Schicht wiederum kann ohne größere Probleme bis in die eigentliche Gleitlagerschicht (gering poröse Schicht) abgetragen werden. Durch diese Verfahrensweise erreicht man einen Ausgleich der Schichteigenspannung, kein oder nur geringes Ausglühen des Pleuels und hohe Haftzugfestigkeiten der Gleitlagerschicht, die üblicherweise ≥ 20 N/mm² und insbesondere ≥ 25 N/mm² liegen. Auch Haftzugfestigkeiten oberhalb 28 N/mm² sind möglich. Mit Aluminiumbronze läßt sich beispielsweise eine Schichthärte von ca. 185 HV_{0,3} und höher erreichen.

Für höherbelastete Gleitlagerschichten im Pleuel, insbesondere dem großen Pleuelauge, wie sie vorwiegend bei Dieselmotoren vorliegen, ist es vorteilhaft, die Restölmenge innerhalb der Gleittagerschicht zu erhöhen. Dies erfolgt erfindungsgemäß durch eine Vergrößerung des Ölrückhaltevolumens bei Motorstillstand bzw. bei einer Motordrehzahl unterhalb der Leerlaufdrehzahl durch Einbringen einer oder mehrerer Schmiernuten in die Gleitlagerschicht. Hierdurch wird beim Motorstart oder Motorauslauf der Bereich der Mischreibung in einer kürzeren Zeit durchlaufen. Diese kürzere Zeit ist ein Resultat einer längeren Aufrechterhaltung bzw. schnelleren Bildung des Gleitfilms, der durch Adhäsion des Motoröles aus den Mikroporen und der oder den Nuten mit der Kurbelwelle resultiert. Durch das Einbringen mindestens einer Nut in die Lagerschicht, insbesondere mit einer etwas porösen Oberfläche, wird erreicht, daß der Schmierfilm "länger" hält, obwohl der Öldruck der Pumpe bereits abgefallen ist bzw. gerade aufgebaut wird. Besonders vorteilhaft ist der Nuteneffekt, wenn die Nuten überwiegend radial, d.h. in Umfangsrichtung, verlaufen. Besonders bevorzugt sind die Nuten dabei in sich geschlossen, d.h. eine Endlosnut und insbesondere eine ringförmige Endlosnut. Die Nut ist vorteilhaft in einer V- bzw. Trapezform ausgebildet, wobei die Seiten der Nut in einem Winkel von vorzugsweise 30 bis 80° und insbesondere 45 bis 60° zueinander stehen. Als Nuttiefe ist eine Tiefe im Bereich 0,2 bis 1 mm und insbesondere 0,4 bis 0,6 mm geeignet. Die Anzahl der Nuten richtet sich vorzugsweise nach der Gleitlagerbreite, dem Traganteil des Gleitlagers und dem erforderlichen zusätzlichen Ölrückhaltevolumen. Die angegebene Nutenform und -tiefe beziehen sich vorteilhaft auf den Zustand vor einer thermisch gespritzten Beschichtung. Als thermisch gespritzte Beschichtung kommt besonders bevorzugt das Plasmaspritzen zum Einsatz.

Vorzugsweise wird die Substratoberfläche nach dem Einbringen der einen oder mehreren Rillen mit der Gleitschicht beschichtet, insbesondere mit der Verbundlagerschicht mit unterschiedlicher Porosität, die oben beschrieben ist. Bei der anschließenden Nachbearbeitung der Lagerfläche werden vorzugsweise die Nuten nicht oder weniger nachgearbeitet, so daß die rauhe (Plasma-)Schichtstruktur eine besonders gute Ölrückhaltung bewirkt.

Bei dem Aufspritzen der Lagerschicht wird vorteilhaft ein Metall aufgespritzt, wobei bevorzugt Metallegierungen zum Einsatz kommen. Weiterhin kommt bevorzugt ein Gemisch verschiedener Metalle (insbesondere Metallegierungen) zum Einsatz. Ein solches Gemisch kann beispielsweise eine Mischung aus Aluminium und Zinn sein, wobei die Mischung besonders vorteilhaft durch Mischen der einzelnen Komponenten in Pulverform erhalten wird. Die Klassifikation des Metallpulvers ist u.a. von den einzelnen Spritzparametern abhängig und kann von dem Fachmann durch Versuchsreihen leicht ermittelt werden. Als Lagerwerkstoffe werden vorteilhaft eingesetzt Bronzen, insbesondere Aluminiumbronze (Aluminium/Zinn), aber auch Kupferbronze sowie auch Metall-Weichstoff-Schichten und/oder Metall-Festschmierstoff-Schichten. Als Weichstoff kommen beispielsweise weiche Metalle, wie Blei zum Einsatz, die in einem härteren Metall, wie beispielsweise legiertem Aluminium (Aluminium/Kupfer/Magnesium/Chrom) verteilt sind. Als Weichstoffe können aber auch andere Materialien, wie beispielsweise Fluorpolymere (z. B. Polytetrafluorethylen) eingesetzt werden. Als Festschmierstoff eignen sich beispielsweise Verbindungen wie Molybdändisulfid, Bornitrit oder Graphit.

Besonders vorteilhaft wird der Lagerwerkstoff mit Übermaß aufgespritzt, das anschließend mechanisch nachbearbeitet wird. Zum Nacharbeiten kommt beispielsweise ein Honen zum Einsatz, insbesondere ist hier Feinspindeln geeignet. Beim Honen werden bevorzugt 20 bis 300 µm und insbesondere 50 bis 200 µm des Lagerwerkstoffes abgetragen; beim Feinspindeln beträgt das Übermaß vorteilhaft 50 bis 1 000 µm und insbesondere 100 bis 500 µm.

Die fertige Lagerschicht (nach dem Abtragen des Übermaßes) beträgt vorzugsweise 150 bis 800 µm und insbesondere 200 bis 500 µm. Eine solche Schicht ist erheblich dünner als die üblichen Lagerschalen, deren Dicke im Bereich 2,5 mm liegt. Dies bedeutet, daß am Pleuel entweder mehr Material bestehen bleibt (höhere Belastung möglich), oder daß die Pleuel mit einem geringeren Gewicht hergestellt werden können.

Erfindungsgemäß kann das Pleuelauge, das mit dem Lagerwerkstoff durch thermisches Spritzen beschichtet wird, vorteilhaft erst nach dem Aufbringen des Lagerwerkstoffes geöffnet werden. Diese Verfahrensweise kommt besonders dann zum Einsatz, wenn das Pleuelauge aufgebrochen (gecrackt) wird. Bei diesem Verfahren wird das Pleuelauge (innen) mit je einer Kerbe an den gewünschten Bruchstellen verstehen. Die Kerben werden besonders vorteilhaft mittels eines Lasers eingebracht, wobei beispielsweise ein FK-Laser unter ca. 45° in das Pleuelauge eingefahren wird. Als Laserleistung kommen insbesondere 5 bis 10 kW zum Einsatz. Die Kerbe wird vorteilhaft in einer Breite von 0,3 bis 0,8 mm und in einer Tiefe von 0,2 bis 0,7 mm eingebracht. Die Bruchstelle sitzt üblicherweise in etwa mittig in dem Pleuelauge. Alternativ kann die Kerbe auch durch Erodieren oder über ein Räumwerkzeug, beispielsweise durch Stoßen, eingebracht werden.

Beim Kerben und Brechen des Pleuelauges erfolgt der Verfahrensablauf vorteilhaft derart, daß zuerst das Pleuelauge gekerbt (z.B. mit einem Werkzeug, Laser oder durch Erodieren) wird, dann wird der Lagerwerkstoff durch thermisches Spritzen aufgebracht und anschließend erfolgt das Brechen. Durch diese Verfahrensweise entfällt der Spalt (bzw. wird minimiert) der sonst an der Bruchstelle bzw. zwischen den einzelnen Lagerschalen besteht. Ein solcher Spalt fördert bei einer hohen Motorbelastung den Abriß des Ölfilms. Durch die Verfahrensweise des Kerbens vor dem Beschichten des Lagerwerkstoffes erreicht man bessere Schmiereigenschaften. Unter Umständen kann auch ein Brechen vor dem Beschichten des Lagerwerkstoffes erfolgen, der dann anschließend nochmal (bevorzugt ohne Kerbung) gebrochen wird.

Wenn das Pleuelauge durch Aufschneiden geöffnet wird, erfolgt dies vorzugsweise vor dem Aufbringen des Lagerwerkstoffes durch thermisches Spritzen. Bei dieser Verfahrensweise wird das Pleuelauge aufgeschnitten und die Trennflächen der verbliebenen Pleuelstange und des Pleueldeckels werden einzeln glatt geräumt. Die Teile werden anschließend wieder zusammengesetzt, mit Bohrungen und Gewinden versehen und zusammengeschraubt. Vorteilhaft wird in das wieder zusammengeschraubte Pleuelauge auch hier eine Kerbe (an der Trennstelle) eingebracht, insbesondere vor dem Beschichten mit dem Lagerwerkstoff. Anschließend wird das Pleuelauge zur Trennung der Lagerschicht vorteilhaft wieder aufgebrochen. Wenn das Brechen hierbei zu ungleichmäßig erfolgt, muß die Lagerschicht selbst gekerbt werden.

Das oben beschriebene Bearbeiten der Lagerschicht (Honen oder Spindeln) erfolgt besonders vorteilhaft erst nach dem Öffnen des Pleuelauges. Hierdurch wird ein eventuell beim Brechen der Lagerschicht entstehender Grat an der Bruchkante gleichzeitig mit der Entfernung des Übermaßes entfernt.

In das erfindungsgemäß hergestellte Pleuel kann auch ein Ölkanal in das Pleuelauge eingebracht werden. Dieser Ölkanal wird vorteilhaft erst nach dem Aufbringen der Lagerschicht und insbesondere nach deren Nachbearbeitung in das Pleuelauge gebohrt. Der Ölkanal kann hierbei auch durch die Pleuelstange hindurch zu dem gegenüberliegenden Pleuelauge gebohrt werden.

Erfindungsgemäß werden auch die Planflächen (große Seitenflächen) des Pleuels vorteilhaft erst nach dem Aufbringen der Lagerschicht nachgearbeitet. Die Nachbearbeitung erfolgt hier vorzugsweise durch Schleifen der Planflächen.

Bei dem erfindungsgemäßen Verfahren wird dem Beschichten ein Arbeitsschritt vorgeschaltet, in dem das Pleuelauge aufgerauht wird. Das Material des Auges, insbesondere ein C 70 Stahl, wird hierbei vorteilhaft auf eine Mittenrauhtiefe Rₐ von 4 bis 30 µm, insbesondere 8 bis 12 µm aufgerauht. Bei solchen Mittenrauhtiefen wird eine besonders gute Haftung des Lagerwerkstoffes auf dem Material des Pleuelauges erreicht.

Für eine besonders vorteilhafte Fertigung der Lagerschicht in dem Pleuelauge wird mindestens eine der Planflächen des Pleuelauges mit einer Schablone abgedeckt, die eine Öffnung im Bereich des Pleuelauges aufweist. Diese Öffnung soll in etwa gleich groß sein wie das Pleuelauge, so daß der Beschichtungsvorgang durch die Schablone zum einen nicht gestört wird und zum anderen eine Beschichtung der Planfläche im Bereich des Pleuelauges weitgehend vermieden wird. Wenn nur eine Planfläche mit der Schablone abgedeckt wird, dann liegt die andere Planfläche vorteilhaft auf einer Palette, die im Bereich des Pleuelauges ebenfalls eine Öffnung, wie die Schablone, aufweist.

Erfindungsgemäß werden die Pleuelaugen einzelner Pleuel vorteilhaft in einem Arbeitsgang beschichtet. Hierzu liegen mehrere Pleuel, vorteilhaft 2 bis 10 und insbesondere 4 bis 8 derart übereinander, daß die zu beschichtenden Pleuelaugen einen Zylinder bilden. Hierzu kann auf einer Spezialpalette eine die Pleuel zentrierende Halterung vorgesehen sein, in die die Pleuel eingelegt werden. Vorteilhaft werden die bei diesem Verfahren praktisch gleichzeitig beschichteten Pleuel als Gruppe beibehalten, um anschließend in einer Verbrennungskraftmaschine gemeinsam verbaut zu werden. Vorteilhaft werden alle (gleichartigen) Pleuel einer Verbrennungskraftmaschine durch Übereinanderlegen gemeinsam beschichtet. Wenn dies wegen der Anzahl der Zylinder (beispielsweise 12-Zylinder) konstruktiv nicht möglich ist, dann werden zumindest die Pleuel einer Zylinderreihe (6 beim V 12-Motor) übereinanderliegend beschichtet. Mit dieser Verfahrensweise wird erreicht, daß Pleuel gleicher Qualität in einer Verbrennungskraftmaschine verbaut werden.

Während des thermischen Spitzens wird besonders vorteilhaft ein Gasstrom durch das Pleuelauge hindurchgeführt, insbesondere wenn mehrere Pleuel übereinanderliegend beschichtet werden. Als Gasstrom eignet sich insbesondere Luft, die konditioniert und gereinigt wird. Insbesondere soll der Luftstrom praktisch frei von Fett und Feuchtigkeit sein und möglichst in einem vorgegebenen Temperaturbereich (um ca. 20°C) liegen. Der Luftstrom hat vorteilhaft eine Strömungsgeschwindigkeit (Luftsinkgeschwindigkeit) von 3 bis 15 m/s und insbesondere 5 bis 8 m/s. Mit dem Gasstrom wird ein beim Spritzen entstehender Overspray weggeblasen.

Das Spritzen des Lagerwerkstoffes erfolgt vorzugsweise mit einer rotierenden Spritzdüse, die insbesondere bereits oberhalb des Pleuelauges rotierend in das Pleuelauge (bzw. die Pleuelaugen) eingefahren wird. Mit einer solchen Spritzdüse wird eine besonders gleichmäßige Beschichtung im Pleuelauge erreicht. Die Spritzdüse wird bei dem erfindungsgemäßen Beschichten des Pleuelauges mit einem Vorschub von vorzugsweise 0,5 bis 20 mm/s, insbesondere 2 bis 8 mm/s in das Pleuelauge hinein und durch dieses hindurchgeführt.

Beim Spritzauftrag werden besonders bevorzugt mehrere Schichten des Lagerwerkstoffes auf dem Pleuelauge aufgetragen, wobei insbesondere 4 bis 30 Schichten in dem Pleuelauge gebildet werden. Die Schichten werden dabei vorteilhaft in unterschiedlichen Richtungen aufgetragen, was wiederum der Verbesserung der Schichtqualität dient. Dies wird beim Pleuelauge dadurch erreicht, daß die Spritzdüse das Pleuelauge während des Hineinfahrens und während des Hinausfahrens beschichtet, wobei eine rotierende Spritzdüse vorzugsweise ihre Rotationsrichtung beibehält.

Erfindungsgemäß werden die Pleuel in einer Serienfertigung mit dem Lagerwerkstoff beschichtet. Hierbei ist es vorteilhaft, wenn zumindest einzelne Pleuel der Serie vermessen werden. Vermessen wird hierbei insbesondere die Mittenrauhtiefe Rₐ und/oder der Lagerwerkstoff selbst (z. B. die Gleichmäßigkeit der Verteilung des Lagerwerkstoffes beim Einsatz eines Gemisches). Besonders bevorzugt erfolgt das Vermessen der Pleuel zerstörungsfrei.

Die oben und im folgenden beschriebenen Merkmale und Maßnahmen gelten gleichermaßen für die erfindungsgemäßen Verfahren wie Pleuel.

Die Erfindung wird im folgenden anhand von Zeichnungen und Ausführungsbeispielen näher beschrieben.

Es zeigen:
- Figur 1: ein Pleuel in Frontansicht;
- Figur 2: das Pleuel in Seitenansicht;
- Figur 3: einen Schichtaufbau in dem großen Pleuelauge;
- Figur 4: einen Pleueldeckel mit einem Kurbelwellenlagerzapfen und mikroporöser Lagerschicht;

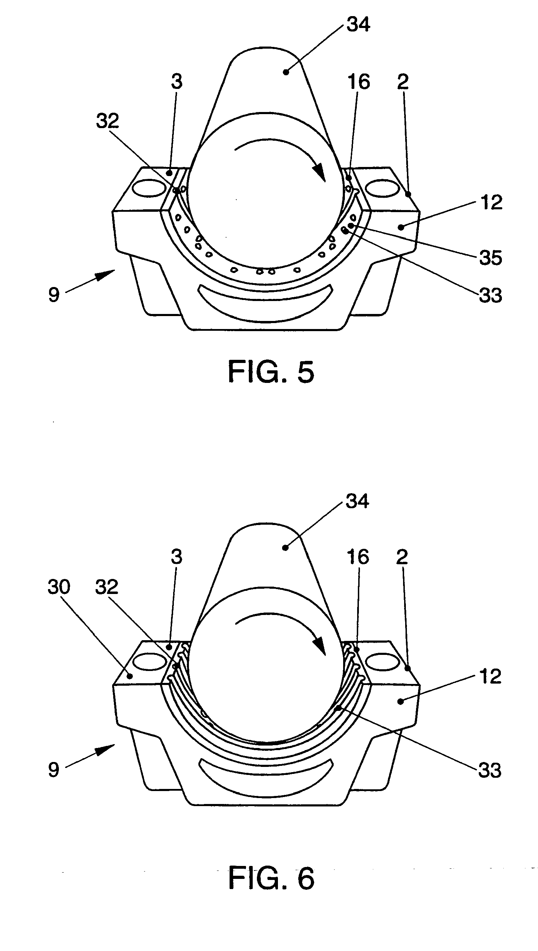

- Figur 5: den Pleueldeckel aus Figur 4 mit einer Radialschmiernut; und
- Figur 6: einen Pleueldeckel mit mehreren Radialschmiernuten.

Die aufgeführten Verfahrensschritte sind nur zum Teil zwangsgekoppelt. Grundsätzlich können einzelne Verfahrensschritte weggelassen, ergänzt, alternativ ausgeführt und/oder mit anderen vertauscht werden.

### Fertigungsablauf Crackpleuel

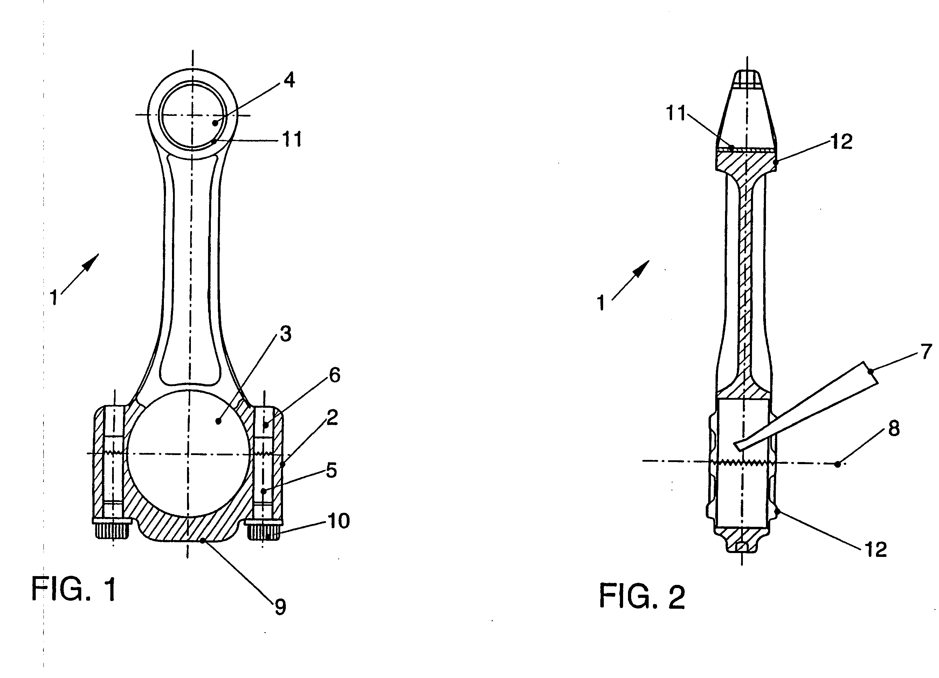

Übliche Pleuel 1 (Fig. 1 und 2), wie sie beispielsweise bisher mit Lagerschalen versehen wurden, z. B. aus C 70 Stahl, werden auf eine Fertigungsstraße gelegt. Hieran schließt sich das Vorschleifen der Seitenflächen 2 an. Anschließend werden das große und das kleine Pleuelauge 3,4 vorbearbeitet, d. h. auf Maß gebracht. Außerdem erfolgt die Schraublochbearbeitung für den Pleueldeckel 9 in den Seitenflächen 2, d. h. es werden Bohrungen 5 und Gewinde 6 eingebracht.

Zur Vorbereitung des Crackens wird in das große Pleuelauge 3 ein FK-Laser 7 unter einem Winkel von 45° eingefahren. Mittels des Lasers 7 wird beidseitig und mittig in das große Pleuelauge 3 je eine Kerbe 8 in einer Breite von ca. 0,5 mm und einer Tiefe von ca. 0,3 bis 0,5 mm eingebrannt. Alternativ kann die Kerbe auch über ein Räumwerkzeug eingebracht werden.

Nachdem die Kerben 8 eingebracht wurden, wird das große Pleuelauge 3, wie weiter unten beschrieben, plasmabeschichtet. Nach dem Auftrag der Plasmaschicht wird das große Pleuelauge 3 zusammen mit der Plasmaschicht über eine Brechvorrichtung mit einer Brechkraft von ca. 100 kN gecrackt. Die Bruchstelle wird gereinigt (mit Druckluft abgeblasen) und der abgebrochene Pleuellagerdeckel 9 mit Schrauben 10 mit dem vorgesehenen Drehmoment montiert. Auch das kleine Pleuelauge wird durch Einpressen einer Buchse 11 montiert. Danach werden die Planflächen 12 fertiggeschliffen.

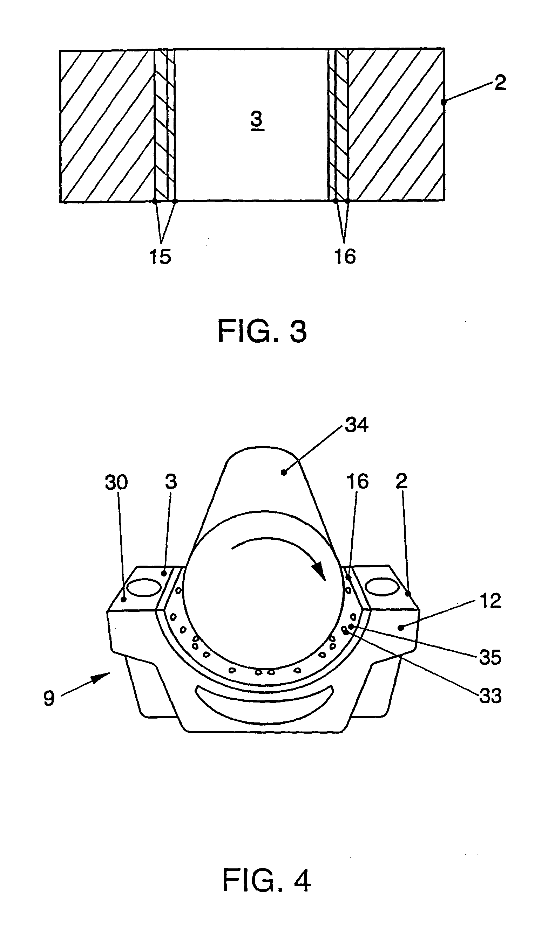

Das große Pleuelauge 3 und ggf. auch das kleine Pleuelauge 4 werden nun auf Maß 16 (Fig. 3) gebracht. Dies geschieht durch Feinbohren bzw. Feinspindeln. Anschließend wird das Pleuel einer kompletten Reinigung unterzogen, vermessen und klassiert.

### Fertigungsablauf geschnittenes Pleuel

Der Fertigungsablauf für ein geschnittenes Pleuel ist im wesentlichen mit dem oben beschriebenen Ablauf gleich, es wird jedoch das Pleuelauge bereits nach dem Räumen der Seitenflächen, der Kopfflächen und Schraubenauflagen durch Aufschneiden getrennt. Nach dem Aufschneiden werden die Trennflächen auf der Pleuelstange und dem Pleueldeckel einzeln geräumt. Hieran schließt sich ein Waschschritt an, nach dem das kleine Pleuelauge vor- und fertigbearbeitet wird. Nun werden die Deckelschrauben durch Einbringen von Bohrungen und Gewinden in die Seitenflächen eingebracht. Die Trennflächen an Pleuelstange und Pleueldeckel werden fertiggeschliffen, nochmal gewaschen und der Pleueldeckel auf die Pleuelstange montiert. Die Schnittfläche wird wieder mit einem FK-Laser gekerbt und anschließend wird das große Pleuelauge mit der Lagerschicht versehen, die anschließend wieder gebrochen wird.

Einzelne Fertigungsschritte, wie beispielsweise das Einpressen der Lagerschale 11 in das kleine Pleuelauge 4 können an unterschiedlichen Stellen des Gesamtablaufs erfolgen, beispielsweise auch bereits vor der Plasmabeschichtung.

### Fertigungsablauf Plasmabeschichtung des großen Pleuelauges

Für die Plasmabeschichtung werden die Pleuel gewaschen und das große Pleuelauge mit Heißdampf entfettet, danach praktisch Restfeuchte frei getrocknet. Die so vorbehandelten Pleuel werden zu 4 bis 8 Stück übereinander gestapelt, so daß die großen Pleuelaugen konzentrisch auf einer entsprechenden Öffnung einer Spezialpalette liegen. Die Pleuel werden dabei vorteilhaft über das vorbearbeitete kleine Pleuelauge und die Pleuelstange bzw. Seitenflächen ausgerichtet und fixiert. Die beladenen Paletten gelangen über eine Bereitstellzone in eine Sandstrahleinheit, in der das große Pleuelauge durch Sandstrahlen auf eine Mittenrauhtiefe Rₐ von ca. 8 bis 12 µm gebracht wird. Anschließend werden die Pleuel in eine Reinigungsstation gefahren und die gestrahlte Oberfläche mit Druckluft ab- bzw. ausgeblasen. Die vorbehandelten Pleuel fahren schließlich in die Plasmastation, in der das große Pleuelauge mit einem rotierenden Plasmabrenner in einer Schichtdicke 15 von ca. 0,5 mm mit einer Aluminiumbronze beschichtet wird (Fig. 3). Die beschichteten Pleuel kommen danach in eine Kühlzone, von der die abgekühlten Pleuel von der Spezialpalette entnommen und der oben beschriebenen Weiterbearbeitung zugeführt werden.

Die erfindungsgemäß hergestellten Pleuel haben den Vorteil, daß sie im großen Pleuelauge keine Lagerschale enthalten, somit entfällt auch die Lagerschalenmontage selbst sowie das Einbringen von Haltenuten bzw. das Entgraten der Lagerschalen. Hierdurch wird das Aufbringen der Plasmaschicht kostenmäßig wettbewerbsfähig. Außerdem ist bei den plasmabeschichteten Pleueln die Montagesicherheit erhöht, da keine Lagerschalen bei der Montage ausgelassen werden können.

Die erfindungsgemäßen Pleuel haben am großen Pleuelauge eine größere Stegbreite im Bereich der Lagerdeckelbefestigung, da die Plasmaschicht nach der Nachbearbeitung nur ca. 0,3 mm dick ist, eine Lagerschale jedoch 2,5 mm aufträgt. Hierdurch ist eine höhere Pleuelbelastung für höherbelastete Motoren und/oder eine Gewichtsersparnis möglich. Außerdem entfällt der Spalt zwischen zwei Lagerschalenhälften, an dem bei einer höheren Belastung der Ölfilm abzureißen beginnt. Die erfindungsgemäß hergestellten Pleuel haben somit bessere Schmiereigenschaften.

### Applikationsablauf

Wie bei den oben beschriebenen Fertigungsabläufen beschrieben, kann die Reinigung der zu beschichtenden und mit Radialnuten versehenen Oberfläche mit Heißdampf erfolgen. Hierbei wird eine praktisch 100 %ige Fettfreiheit erreicht. Das Aufrauhen der Substratoberfläche (Eisenwerkstoff, z.B. C 70) erfolgt durch eine mehrfache Sandstrahlbehandlung mit Al₂O₃ bei ca. 4 bis 6 bar Strahldruck und mit aufsteigender Körnung: Eine erste Strahloperation für die erodierte Bruchkerbe beim Crackpleuel oder beschnittenem Pleuel mit einer Körnung 0 0,063 bis 0,15 mm (230 bis 100 mesh). Eine zweite Strahloperation für die Substratoberfläche und die Radialnut mit einer Körnung ∅ 0,18 bis 0,35 mm (80 bis 45 mesh) und eine dritte Strahloperation für die Substratoberfläche und die Radialnut mit einer Körnung von ∅ 0,6 bis 1,1 mm (30 bis 16 mesh). Als weiterer Arbeitsschritt schließt sich die Plasmabeschichtung mit einer Aluminium-Kupfer-Eisen-Legierung an, wobei beispielsweise eine Alubronze mit 5 bis 15 % Aluminium, 1 bis 5 % Eisen, 1 bis 4 % Kobalt und 0,5 bis 4 % Mangan, insbesondere Aluminium 9 bis 12 %, Mangan ca. 2 %, Kobalt ca. 2 bis 2,5 % und Eisen ca. 3 bis 4 % zum Einsatz kommen kann. Es erfolgt eine erste Plasmabeschichtung mit einer Schichtdicke von ca. 200 bis 250 µm mit einer Pulverkorngröße des Beschichtungsmaterials von durchschnittlich ca. 38 µm, wobei mit den Auftragsparametern, bezogen auf den jeweils verwendeten Brenner, eine Porosität in der Schicht ≤ 1 % eingestellt wird. Ohne Unterbrechung wird mit einem etwas gröberen Pulverkorn (∅ ca. 65 µm) weiterbeschichtet, wobei wiederum eine Schichtdicke von 200 bis 250 µm gebildet wird. Die Anlagenparameter werden hierbei so eingestellt, daß eine Porosität im Bereich 1,5 bis 3,5 % erreicht wird.

Diese Art der Beschichtung kann auch bei Lagern ohne Radialnuten durchgeführt werden.

### Fertigungsablauf geschnittenes Pleuel mit Radialnuten

Im folgenden wird der gesamte Fertigungsablauf beschrieben, einzelne Arbeitsschritte können, wie bereits erwähnt, je nach Arbeitsplanung entfallen, vertauscht, ergänzt oder gegen andere ersetzt werden.

Nach der Anlieferung der Rohpleuel werden diese auf die Fertigungsstraße gelegt, auf der ein Vorschleifen und Räumen der Planflächen 12 erfolgt. Anschließend werden die Seitenflächen 2, Kopfflächen und Schraubenauflagen geräumt und das große Pleuelauge getrennt. Danach folgt ein Räumen der Trennflächen 30 und des großen Pleuelauges 3, wobei die Pleuelstange und der Pleueldeckel 9 einzeln bearbeitet werden. Nach dem Waschen der Teile wird das kleine Pleuelauge 4 vor- und fertigbearbeitet und für die Pleueldeckelschrauben 10 werden die Bohrungen und Gewinde geschnitten. In das kleine Pleuelauge 4 wird die Lagerbuchse 11 eingepreßt, angepreßt und gefast. Die Trennflächen 30 der Pleuelstange und des Pleueldeckels 9 werden fertiggeschliffen und das ganze nochmals gewaschen.

Hiernach wird der Pleueldeckel 9 auf der Pleuelstange auf das vorgesehene Drehmoment angezogen und - beim Einsatz von Radialnuten 32 - die Nuten in das große Pleuelauge eingebracht, beispielsweise durch Fräsen oder Drehen.

Für ein späteres Öffnen der Plasmaschicht 15 oder 16 wird eine Bruchkerbe in das große Pleuelauge eingebracht, beispielsweise durch Erodieren oder Lasern. Hieran schließt sich die Plasmabeschichtung des großen Pleuelauges an.

Bei Bedarf, je nach Pleuelart, kann ein Ölkanal (vom großen Pleuelauge bis zum kleinen Pleuelauge durch die Pleuelstange hindurch) gebohrt werden, dies kann bei Benzinmotoren erfolgen und erfolgt meistens bei Dieselbrennkraftmaschinen.

Die aufgetragene Plasmaschicht 15 wird durch Lösen der Pleueldeckelschrauben 10 gecrackt, dies erfolgt - je nach Plasmabeschichtung - oftmals bereits durch die Eigenspannung der Plasmaschicht 15. Der Pleueldeckel 9 wird abgenommen und die Bruchstelle gereinigt, beispielsweise durch Abblasen. Anschließend wird der Pleueldeckel 9 wieder montiert und die Pleueldeckelschrauben 10 auf Drehmoment angezogen. Das große Pleuelauge wird beidseitig gefast und, je nach Alternative, werden die Kanten der Radialnuten gebrochen (gerundet).

Hiernach werden die Planflächen 12 fertiggeschliffen, das kleine Pleuelauge 4 fertiggebohrt und das große Pleuelauge 3 fertiggespindelt zur Erzeugung der eigentlichen Lauffläche 35 und Freilegen der Microporen 33 auf der Lagerschicht 16. Nach einem weiteren Waschvorgang werden die Pleuel vermessen und klassifiziert, wobei bevorzugt zwei Toleranzklassen gewählt werden.

Die so hergestellten Pleuel werden an der Montagelinie demontiert und an der Montagelinie auf der Kurbelwelle 34 einer Brennkraftmaschine montiert.

Nach der Plasmabeschichtung des großen Pleuelauges und gegebenenfalls Bohren des Ölkanals kann auch bereits das große Pleuelauge beidseitig gefast werden und, je nach Alternative, das Brechen der radialen Nutenkanten erfolgen. Hieran schließt sich dann das Fertigschleifen der Planflächen an, das kleine Pleuelauge wird fertiggebohrt und das große Pleuelauge fertiggespindelt. Nach einem Waschen und Vermessen der Pleuel mit Klassifizierung erfolgt dann, insbesondere direkt an der Montagelinie, das Cracken der Plasmaschicht durch Lösen der Pleueldeckelschrauben. Der Pleueldeckel wird abgenommen und die Bruchstelle durch beispielsweise Abblasen gereinigt. Dann wird das Pleuel auf der Kurbelwelle der Brennkraftmaschine montiert.

Vorteilhaft wird im Pleuel eine Verdrehsicherung des Deckels vorgesehen, beispielsweise durch einen leichten Versatz der Pleueldeckelschrauben-Bohrungen, damit die beim Cracken in der Plasmaschicht entstehenden Zacken wieder identisch zueinander geführt werden.

### Fertigungsablauf Crackpleuel

Das Rohpleuel (Material beispielsweise C70) wird auf die Fertigungsstraße gelegt und vorgeschliffen, wobei die Seitenwangen plan geschliffen werden. Es erfolgt die Vorbearbeitung des großen und kleinen Pleuelauges und die Schraubenlochbearbeitung für den Lagerdeckel (Bohren und Gewindeschneiden). Je nach Lagerart werden gewünschtenfalls eine oder mehrere Radialnuten in das große Pleuelauge eingebracht, beispielsweise durch Fräsen oder Drehen. Anschließend wird das große Pleuelauge gekerbt, beispielsweise mit einem FK-Laser, der unter 45° in das große Pleuelauge eingefahren wird; Laserleistung ca. 7 kW. Hierbei wird beidseitig eine Kerbe von ca. knapp 2 mm Breite und knapp 0,5 mm Tiefe mittig in das große Pleuelauge eingebracht. Die Kerbe kann auch über ein Räumwerkzeug oder durch Erodieren eingebracht werden. Das Pleuelauge wird über eine Brechvorrichtung mit einer Brechkraft von ca. 100 kN gecrackt. Der Pleuellagerdeckel wird abgenommen und die Bruchstelle, beispielsweise durch Druckluft, gereinigt. Der Pleuellagerdeckel wird anschließend wieder montiert und die Pleuellagerdeckelschrauben auf Drehmoment angezogen. Danach wird das große Pleuelauge plasmabeschichtet und in das kleine Pleuelauge die Lagerbuchse eingepreßt. Das große Pleuelauge wird beidseitig gefast, die Pleuelwangen werden fertiggeschliffen und das große und kleine Pleuelauge feingebohrt bzw. feingespindelt. Anschließend erfolgt eine komplette Reinigung (Waschen) und eine Vermessung und Klassifizierung des Pleuels. An der Montagelinie wird das Pleuel demontiert und auf die Kurbelwelle für eine Brennkraftmaschine montiert.

Das Cracken der Plasmaschicht, insbesondere durch Lösen der Pleueldeckelschrauben, kann direkt an der Montagelinie oder auch zu einem vorherigen Zeitpunkt erfolgen. Nach dem Cracken der Plasmaschicht ist es empfehlenswert die Pleueldeckelbruchstelle zu reinigen (abzublasen).

### Fertigungsablauf der Plasmabeschichtung

Das Pleuel wird gewaschen und zumindest das große Pleuelauge mit Heißdampf entfettet und anschließend auf einen möglichst niedrigen Restfeuchtegehalt getrocknet. Mehrere Pleuel werden auf einer Spezialpalette übereinander konzentrisch zum großen Pleuelauge gestapelt (in der Regel 4 bis 8 Pleuel). Die Fixierung kann hierbei über das kleine Pleuelauge und die Pleuelstange bzw. die Seitenflächen erfolgen. Die beladene Spezialpalette wird über eine Neutralzone in eine Sandstrahleinheit eingefahren und positioniert. Das große Pleuelauge wird mit den oben beschriebenen Sandklassifikationen auf eine Mittenrauhtiefe von ca. 6,5 bis 8 µm sandgestrahlt. Anschließend fährt die Spezialpalette mit den sandgestrahlten Pleueln in eine Reinigungsstation, in der die gestrahlte Oberfläche mit Druckluft abgeblasen bzw. ausgeblasen wird. Weiter fährt die Spezialpalette in die Plasmastation, in der das große Pleuelauge zuerst mit einer geringporösen und anschließend mit einer etwas poröseren Schicht aus Aluminiumbronze in einer Gesamtstärke von 0,5 mm plasmabeschichtet wird. Die beschichteten Pleuel fahren in eine Kühlzone, um nach dem Abkühlen von der Palette zur Weiterbearbeitung genommen zu werden.

Die vorliegende Erfindung hat den Vorteil, daß die Lagerschalen und deren Montage sowie die Haltenuten und das Entgraten hierfür entfallen kann. Hierdurch wird die Montagesicherheit erhöht. Durch die Plasmabeschichtung erhält man eine größere Stegbreite (kleinerer Pleuelaugen-Durchmesser) im Bereich der Lagerdeckelbefestigung, da der Lagerschalendicke von ca. 2,5 mm eine Plasmaschicht von weniger als 0,5 mm gegenübersteht. Hierdurch ist eine höhere Pleuelbelastung in höher belasteten Motoren bzw. eine gewisse Ersparnis möglich. Außerdem entfällt der Spalt zwischen zwei Lagerschalenhälften, der konstruktionsbedingt unter Umständen zu einem Ölfilmabriß führen kann. Mit der Plasmabeschichtung erreicht man bessere Schmiereigenschaften. Gleichzeitig werden die Toleranzen reduziert, da eine Toleranzklasse durch die Plasmabeschichtung entfällt. Hiermit erreicht man durch geringere Fertigungstoleranzen einen besseren Motorlauf. Durch den Einsatz von Radialnuten in der Plasmabeschichtung erreicht man eine höhere Lagerbelastung und eine Reduzierung der Mischreibungszeit. Das Mikrodruckkammersystem verbessert die Reibwerte, insbesondere in Kombination mit einer oder mehreren Nuten. Die Nuten können auch mit einem anderen Gleitlagermaterial beschichtet werden, das nach einer spanabhebenden Bearbeitung der Beschichtung im wesentlichen nur noch in den Nuten vorliegt. Solche Lagermaterialien können auf Basis Blei, Zinn oder auch Nickel sein. Auch hiermit werden höhere Lagerbelastungen bzw. Standzeiten möglich.

## Patentansprüche

1. Verfahren zum Herstellen eines Pleuels mit einem Pleuelauge, in dem eine Lagerschicht angeordnet ist, die durch thermisches Spritzen eines Lagerwerkstoffes auf das Pleuelauge aufgebracht wird, **dadurch gekennzeichnet, dass** das Pleuelauge vor dem Aufbringen der thermisch gespritzten Lagerschicht mit einem Partikelstrahl aufgerauht wird und dass Partikel aus mindestens drei unterschiedlichen Sieblinien verwendet werden.

2. Verfahren nach Anspruch 1, **dadurch gekennzeichnet, dass** die Partikel aus unterschiedlichen Sieblinien in unterschiedlichen Strahlschritten eingesetzt werden.

3. Verfahren nach Anspruch 1 oder 2, **dadurch gekennzeichnet, dass** in mindestens drei Strahlschritten jeweils gröbere Partikel eingesetzt werden.

4. Verfahren nach einem der vorhergehenden Ansprüche, **dadurch gekennzeichnet,** das für die feine körnung eine Sieblinie 80 mesh (180 µm) oder feiner, insbesondere 100 bis 230 mesh (150 µm bis 63 µm), eingesetzt wird.

5. Verfahren nach einem der vorhergehenden Ansprüche, **dadurch gekennzeichnet, dass** für die mittlere Körnung eine Sieblinie 100 mesh (150 µm) oder größer, insbesondere 80 bis 45 mesh (180 µm bis 355 µm), eingesetzt wird.

6. Verfahren nach einem der vorhergehenden Ansprüche, **dadurch gekennzeichnet, dass** für die grobe Körnung eine Sieblinie 45 mesh (355 µm) oder größer, insbesondere 30 bis 16 mesh (600 µm bis 1,18 mm), eingesetzt wird.

7. Verfahren nach einem der vorhergehenden Ansprüche, **dadurch gekennzeichnet, dass** mit einer feinen Sieblinie zumindest Bereiche des Pleuelauges mit einer Nut und/oder Kerbe aufgerauht werden.

8. Verfahren nach einem der vorhergehenden Ansprüche, **dadurch gekennzeichnet, dass** der Partikelstrahl Al₂O₃, SiO₂ und/oder SiC enthält.

9. Verfahren nach einem der vorhergehenden Ansprüche, **dadurch gekennzeichnet, dass** der thermisch gespritzte Lagerwerkstoff mechanisch nachbearbeitet wird, insbesondere spanabhebend.

10. Verfahren nach einem der vorhergehenden Ansprüche, **dadurch gekennzeichnet, dass** der Lagerwerkstoff mittels Plasmaspritzen aufgebracht wird.

11. Verfahren nach einem der vorhergehenden Ansprüche, **dadurch gekennzeichnet, dass** als Lagerwerkstoff ein Metall, insbesondere eine Metallegierung, aufgebracht wird.

12. Verfahren nach einem der vorhergehenden Ansprüche, **dadurch gekennzeichnet, dass** das Pleuelauge auf eine Mittenrauhtiefe R_{A} von 4 bis 30 µm, insbesondere 6 bis 12 µm aufgerauht wird.

13. Verfahren nach einem der vorhergehenden Ansprüche, **dadurch gekennzeichnet, dass** mehrere Pleuel mit ihren mit dem Lagerwerkstoff zu beschichtenden Pleuelauge konzentrisch übereinanderliegend behandelt werden.

14. Verfahren nach einem der vorhergehenden Ansprüche, **dadurch gekennzeichnet, dass** der Lagerwerkstoff in einer Dicke, ggf. nach einer Nachbearbeitung, von 150 bis 800 µm, insbesondere 200 bis 500 µm hergestellt wird.

15. Verfahren nach einem der vorhergehenden Ansprüche, **dadurch gekennzeichnet, dass** das Pleuelauge durch Kerben und Brechen geöffnet wird.

16. Verfahren nach einem der vorhergehenden Ansprüche, **dadurch gekennzeichnet, dass** die Sieblinien um mindestens zwei mesh-Klassen auseinander liegen.

17. Pleuel mit einem Pleuelauge, in dem eine Lagerschicht angeordnet ist, die durch thermisches Spritzen eines Lagerschichtmaterials auf dem Pleuelauge aufgebracht ist, **dadurch gekennzeichnet, dass** das Pleuelauge vor dem Aufbringen der Lagerschicht mit einem Partikelstrahl aufgerauht ist, der Partikel aus mindestens drei unterschiedlicher Sieblinien enthält.

18. Pleuel nach Anspruch 17 **dadurch gekennzeichnet, dass** die thermisch gespritzte Lagerschicht spanabhebend bearbeitet ist.

## Claims

1. Method for producing a connecting rod with a connecting-rod eye, in which a bearing layer is arranged, applied to the connecting-rod eye by thermal spraying of a bearing material, **characterized in that**, before the thermally sprayed bearing layer is applied, the connecting-rod eye is roughened by a jet of particles and **in that** particles from at least three different grading curves are used.

2. Method according to Claim 1, **characterized in that** the particles from different grading curves are used in different blasting steps.

3. Method according to Claim 1 or 2, **characterized in that** respectively coarser particles are used in at least three blasting steps.

4. Method according to one of the preceding claims, **characterized in that** a grading curve of 80 mesh (180 µm) or finer, in particular 100 to 230 mesh (150 µm to 63 µm), is used for the fine grain size fraction.

5. Method according to one of the preceding claims, **characterized in that** a grading curve of 100 mesh (150 µm) or larger, in particular 80 to 45 mesh (180 µm to 355 µm), is used for the medium grain size fraction.

6. Method according to one of the preceding claims, **characterized in that** a grading curve of 45 mesh (355 µm) or larger, in particular 30 to 16 mesh (600 µm to 1.18 mm), is used for the coarse grain size fraction.

7. Method according to one of the preceding claims, **characterized in that**, with a fine grading curve, at least regions of the connecting-rod eye are roughened with a groove and/or notch.

8. Method according to one of the preceding claims, **characterized in that** the jet of particles contains Al₂O₃, SiO₂ and/or SiC.

9. Method according to one of the preceding claims, **characterized in that** the thermally sprayed bearing material is mechanically finished, in particular by machining.

10. Method according to one of the preceding claims, **characterized in that** the bearing material is applied by means of plasma spraying.

11. Method according to one of the preceding claims, **characterized in that** a metal, in particular a metal alloy, is applied as the bearing material.

12. Method according to one of the preceding claims, **characterized in that** the connecting-rod eye is roughened to an average roughness R_{A} of 4 to 30 µm, in particular 6 to 12 µm.

13. Method according to one of the preceding claims, **characterized in that** a number of connecting rods are treated with their connecting-rod eyes that are to be coated with the bearing material lying concentrically one on top of the other.

14. Method according to one of the preceding claims, **characterized in that** the bearing material is produced in a thickness, if appropriate after finishing, of 150 to 800 µm, in particular 200 to 500 µm.

15. Method according to one of the preceding claims, **characterized in that** the connecting-rod eye is opened by notching and rupturing.

16. Method according to one of the preceding claims, **characterized in that** the grading curves lie at least two mesh classes apart.

17. Connecting rod with a connecting-rod eye, in which a bearing layer is arranged, applied to the connecting-rod eye by thermal spraying of a bearing layer material, **characterized in that**, before the bearing layer is applied, the connecting-rod eye is roughened by a jet of particles which contains particles from at least three different grading curves.

18. Connecting rod according to Claim 17, **characterized in that** the thermally sprayed bearing layer is machined.

## Revendications

1. Procédé en vue de la fabrication d'une bielle ayant un oeil de tête de bielle, dans lequel une couche de coussinet est disposée, qui est appliquée par pulvérisation thermique d'un matériel de coussinet sur l'oeil de tête de bielle, **caractérisé en ce que** l'oeil de tête de bielle est rendu rugueux, avant l'application de la couche de coussinet pulvérisée par voie thermique, à l'aide d'un jet de particules et **en ce que** des particules d'au moins trois courbes de tamisage différentes sont utilisées.

2. Procédé selon la revendication 1, **caractérisé en ce que** les particules provenant de courbes de tamisage différentes sont utilisées dans des étapes de grenaillage à jet différentes.

3. Procédé selon la revendication 1 ou 2, **caractérisé en ce que** l'on utilise, dans au moins trois étapes de grenaillage à jet, à chaque fois, des particules plus grossières.

4. Procédé selon l'une quelconque des revendications précédentes, **caractérisé en ce que**, pour la granulométrie fine, on utilise une courbe de tamisage 80 mesh (180 µm) ou plus fine, en particulier de 100 à 230 mesh (150 µm à 63 µm).

5. Procédé selon l'une quelconque des revendications précédentes, **caractérisé en ce que**, pour la granulométrie moyenne, on utilise une courbe de tamisage 100 mesh (150 µm) ou plus grossière, en particulier de 80 à 45 mesh (180 µm à 355 µm).

6. Procédé selon l'une quelconque des revendications précédentes, **caractérisé en ce que**, pour la granulométrie grossière, on utilise une courbe de tamisage 45 mesh (355 µm) ou plus grossière, en particulier de 30 à 16 mesh (600 µm à 1,18 mm).

7. Procédé selon l'une quelconque des revendications précédentes, **caractérisé en ce que** l'on rend rugueux avec une courbe de tamisage fine, tout au moins les domaines de l'oeil de la tête de bielle ayant une rainure et/ou une entaille.

8. Procédé selon l'une quelconque des revendications précédentes, **caractérisé en ce que** le jet de particules contient Al₂O₃, SiO₂ et/ou SiC.

9. Procédé selon l'une quelconque des revendications précédentes, **caractérisé en ce que** le matériau de coussinet pulvérisé par voie thermique subit un post-usinage par voie mécanique, en particulier par enlèvement de copeaux.

10. Procédé selon l'une quelconque des revendications précédentes, **caractérisé en ce que** le matériau de coussinet est appliqué par pulvérisation au plasma.

11. Procédé selon l'une quelconque des revendications précédentes, **caractérisé en ce que** l'on applique, en tant que matériau de coussinet, un métal, en particulier, un alliage métallique.

12. Procédé selon l'une quelconque des revendications précédentes, **caractérisé en ce que** l'oeil de tête de bielle est rendu rugueux à raison d'une profondeur de rugosité moyenne R_{A} de 4 à 30 µm, en particulier, de 6 à 12 µm.

13. Procédé selon l'une quelconque des revendications précédentes, **caractérisé en ce que** plusieurs bielles sont traitées avec leur oeil de tête de bielle à traiter à l'aide du matériau de coussinet placés les uns sur les autres de manière concentrique.

14. Procédé selon l'une quelconque des revendications précédentes, **caractérisé en ce que** le matériau de coussinet est fabriqué dans une épaisseur, le cas échéant, après un post-usinage, de 150 à 800 µm, en particulier, de 200 à 500 mm.

15. Procédé selon l'une quelconque des revendications précédentes, **caractérisé en ce que** l'oeil de tête de bielle est ouvert par entaillage et cassure.

16. Procédé selon l'une quelconque des revendications précédentes, **caractérisé en ce que** les courbes de tamisage se situent à un écart d'au mois deux classes mesh.

17. Bielle avec un oeil de tête de bielle, dans lequel est disposée une couche de coussinet, qui est appliquée sur l'oeil de tête de bielle par pulvérisation thermique d'un matériau de couche de coussinet, **caractérisés en ce que** l'oeil de tête de bielle est rendu rugueux, avant l'application de la couche de coussinet, à l'aide d'un jet de particules, qui contient des particules provenant d'au moins trois courbes de tamisage différentes.

18. Bielle selon la revendication 17, **caractérisée en ce que** la couche de coussinet pulvérisée par voie thermique est usinée par enlèvement de copeaux.
